# EUROPÄISCHE PATENTSCHRIFT

(11) **EP 3 139 787 B1**
(45) Veröffentlichungstag und Bekanntmachung des Hinweises auf die Patenterteilung: **11.07.2018**
(21) Anmeldenummer: 15721199.6
(22) Anmeldetag: 04.05.2015
(51) Int. Cl.: A44C 17/04, A44C 27/00, B44C 5/00, B29C 65/48, B32B 5/02, B32B 27/08, B32B 27/12, B32B 27/30, B44C 1/18, B29L 31/00, B32B 3/08

(54) **VERBUNDKÖRPER AUS FASERVERBUNDWERKSTOFF UND DEKORATIVEM ELEMENT**
COMPOSITE BODY MADE OF FIBRE-COMPOSITE MATERIAL AND A DECORATIVE ELEMENT
CORPS COMPOSITE DÉCORATIF CONSTITUÉ D'UNE MATIÈRE COMPOSITE RENFORCÉE PAR DES FIBRES ET D'UN ÉLÉMENT DÉCORATIF

(30) Priorität: 05.05.2014 EP 14001564
(43) Veröffentlichungstag der Anmeldung: 15.03.2017
(73) Patentinhaber: D. Swarovski KG, 6112 Wattens (AT)
(72) Erfinder: HERMANN, Walter, A-6123 Terfens (AT); KUNSTL, Robin, A-6122 Fritzens (AT); SANTER, Markus, A-6020 Innsbruck (AT)
(74) Vertreter: Moore, Michael Richard
(86) Internationale Anmeldenummer: PCT/EP2015/059652
(87) Internationale Veröffentlichungsnummer: WO 2015/169719

(56) Entgegenhaltungen:
- AT-A4- 507 883
- DE-U1- 29 908 787
- FR-A- 1 120 802
- FR-A1- 2 725 882

## Beschreibung

Die Erfindung betrifft einen dekorativer Verbundkörper enthaltend einen plattenförmigen Trägerkörper aus Kunststoff und wenigstens ein im Trägerkörper befestigtes dekoratives Element, wobei der Trägerkörper zumindest bereichsweise aus einem faserverstärktem Kunststoff besteht, und wobei das dekorative Element mit aufgeschmolzenem bzw. zumindest teilweise verflüssigtem und wieder erstarrtem Kunststoff des plattenförmigen Trägerkörpers stoffschlüssig verbunden ist.

Dekorative Verbundkörper umfassend einen Trägerkörper mit wenigstens einem darin befestigten dekorativen Element können aus den verschiedensten Werkstoffen hergestellt sein. Insbesondere haben sich Kunststoffe als günstige Trägermaterialien herausgestellt, da diese neben günstigen Werkstoffeigenschaften auch einfach zu verformen und daher vielseitig anwendbar sind. Im Vergleich zu metallischen Trägerkörpern haben Kunststoffe jedoch Nachteile hinsichtlich der Festigkeit des Trägerkörpers.

Um eine Optimierung der Werkstoffeigenschaften eines dekorativen Verbundkörpers zu erreichen, lehrt die DE 199 06 844 die Verwendung eines Trägers aus Kunststoff, bestehend aus einem faserverstärkten Kunstharz und einer mehrlagigen Oberflächenbeschichtung. Zur Anordnung von Schmucksteinen im Träger werden Durchgangslöcher gebohrt, in welchen Fassungen oder Metalleinsätze befestigt sind. Um die Fassung in einem Durchtrittsloch zu verankern, wird der Zwischenraum zwischen der Fassung und dem Trägerkörper mit einem Kunstharz ausgegossen. Zur Befestigung der Metalleinsätze wiederum sind passende Ausfräsungen im Träger vorgesehen.

Ein derartiger Verbundkörper hat mehrere Nachteile. Zum einen ist aufgrund der Notwendigkeit der Fassungen bzw. der Metalleinsätze ein besonders hoher Herstellungsaufwand für den Verbundkörper notwendig. Darüber hinaus ist es für manche Anwendungen eines mit Schmucksteinen versehenen dekorativen Verbundkörpers ungünstig, wenn Durchgangslöcher im Trägerkörper vorhanden sind, zumal die in der DE 199 06 844 beschriebenen Fassungen und Metalleinsätze keine Dichtheit gegen durchtretendes Wasser oder Schmutz bieten können. Darüber hinaus besteht das Risiko, dass sich die Schmucksteine aus den Metalleinsätzen bzw. den Fassungen lösen, wodurch der Verbundkörper erheblich an Wert einbüßt.

Ein Schmuckstück bestehend aus einem Faserverbundwerkstoff ist in der DE 299 08 787 U1 gezeigt. Durch die Verwendung von Faserverbundwerkstoffen im Oberflächenbereich der Sichtseite des Schmuckstückes ist die Struktur der Verbundfasern, insbesondere die Geflechtstruktur, Gewebestruktur, Gestick- oder Gestrickstruktur, erkennbar, wodurch sich eine Vielfalt von Oberflächenmustern darstellen lässt. Der Faserverbundwerkstoff reicht bis an die Außenseite des Schmuckstücks. Alternativ kann eine Lackbeschichtung vorgesehen sein. In einer Ausführungsform sind in der Sichtseite des Schmucksteins Ausnehmungen vorgesehen, in welche Edelmetall oder Edelsteineinsätze eingepasst sind. Dabei wird die Ausnehmung während der Herstellung des Faserverbundkörpers oder durch Bohrungen im fertigen Faserverbundkörper erzeugt. Danach werden die Edelmetall- oder Edelsteineinsätze eingepasst, sodass sich eine auf Reibung basierende kraftschlüssige Verbindung zwischen dem Einsatz und dem Faserverbundkörper ergibt. Eine solche kraftschlüssige Verbindung bietet nur unzureichenden Halt für den Edelmetall- oder Edelsteineinsatz im Faserverbundkörper.

Die FR 2 725 882 betrifft ein Verfahren zur Befestigung eines Schmucksteins in einem Ring aus Kunststoff, wobei aus einem Block aus thermoplastischem Kunststoff ein Element abgeschnitten wird. In eine gefräste Ausnehmung mit kleinen Ausmaßen wird nach einer Wärmebehandlung ein Schmuckstein eingepresst und so lange mit hohem Druck beaufschlagt, bis der Kunststoff abgekühlt ist. Zur endgültigen Fixierung des Schmucksteins erfolgt eine weitere Wärmebehandlung, bei der ein Rückhaltebereich entlang der Öffnung der Ausnehmung ausgebildet wird, wodurch eine formschlüssige Verbindung für den Schmuckstein hergestellt wird.

Aufgabe der vorliegenden Erfindung ist es, einen dekorativen Verbundkörper der eingangs beschriebenen Art zur Verfügung zu stellen, der einen Trägerkörper mit besonders günstigen Werkstoffeigenschaften aufweist, wobei das wenigstens eine dekorative Element im Trägerkörper einen besonders stabilen Halt finden soll und zusätzlich gegen äußere Einwirkungen oder Umwelteinflüsse geschützt sein soll.

Dies wird durch einen Verbundkörper mit den Merkmalen des Anspruchs 1 gelöst.

Das dekorative Element ist ausgewählt unter einem, vorzugsweise mit Facetten versehenen, Schmuckstein, welcher ein natürlicher oder synthetischer Edelstein oder ein Schmuckstein aus keramischem Material oder ein Glasstein, vorzugsweise aus Kristallglas, sein kann, einem metallischen Dekorationsobjekt, wie z.B. einem gestanztem Blech, einem Holzelement, wie z.B. einer Echtholz-Furnierplatte, einer Dekorfolie oder einem technischen Funktionselement wie z.B. LEDs, Sensoren, Magnetstreifen, Computerchips, usw. Der Trägerkörper besteht zumindest bereichsweise, in einer Ausführungsform auch zur Gänze, aus einem faserverstärkten Kunststoff und dient zur Anordnung eines dekorativen Elements. Durch den Bereich aus faserverstärktem Kunststoff ergeben sich jene günstigen Werkstoffeigenschaften, die von Faserverbundstoffen geboten werden, wie z. B. eine erhöhte Festigkeit, insbesondere eine erhöhte Zugfestigkeit in Faserrichtung, geringes Gewicht, geringe Wärmeausdehnung, Korrosionsbeständigkeit, hohe Schwingfestigkeit, gute Formbarkeit, etc

Durch einen plattenförmig ausgebildeten Trägerkörper wird die Herstellung des Verbundkörpers erleichtert. Ein plattenförmiger Trägerkörper bietet sich insbesondere dann an, wenn eine Mehrzahl von dekorativen Elementen im Verbundkörper angeordnet werden sollen. Zudem können Verbundkörper mit plattenförmigen Trägerkörpern günstig für Produkte mit zumindest teilweise planen Oberflächen wie zum Beispiel für Mobiltelefone, für Hüllen für Mobiltelefone, Kreditkarten oder Mitgliedskarten, verwendet werden.

Bei einer stoffschlüssigen Verbindung mit dem Trägerkörper aus Kunststoff und insbesondere mit aufgeschmolzenem und wieder erstarrtem Kunststoff werden die Nachteile des eingangs erwähnten Standes der Technik behoben und eine fertigungstechnisch einfache Möglichkeit geboten, dekorative Elemente, insbesondere Schmuck- oder Glassteine, mit einem Trägerkörper aus Kunststoff zu verbinden, wobei infolge der stoffschlüssigen Verbindung eine besonders stabile und innige Befestigung des dekorativen Elementes im Trägerkörper ermöglicht wird.

Jene Seite des Trägerkörpers, an der das wenigstens eine dekorative Element angeordnet ist, ist zusätzlich mit einer für Licht des sichtbaren Spektrums transparenten oder transluzenten Folie versehen. Unter einem transluzenten Körper wird im Zusammenhang mit der vorliegenden Erfindung ein Körper verstanden, der für Licht des sichtbaren Spektrums partiell durchlässig ist und dadurch im Vergleich zu einem transparenten Körper eine erhöhte Trübung aufweist. Die partielle Lichtdurchlässigkeit kann dabei vom Spektralbereich abhängen, sodass der transluzente Körper auch in einer von Weiß verschiedenen Farbe durchscheinend ausgebildet ist. Bevorzugt sind Folien auf Basis von Polymethylmethacrylat (PMMA). Die Folie kann während des Herstellungsverfahrens zudem als Transferfolie dienen, mittels der das wenigstens eine dekorative Element oder auch eine Mehrzahl von dekorativen Elementen vor bzw. während der Befestigung mit dem Trägerkörper gehalten wird. Zusätzlich oder alternativ kann an jener Seite des Trägerkörpers, an der das wenigstens eine dekorative Element angeordnet ist, oder an der Folie eine für Licht des sichtbaren Spektrums transparente oder transluzente Deckplatte, vorzugsweise aus PMMA, angeordnet werden. Diese Deckplatte dient ebenso wie die Folie zum Schutz des dekorativen Elements und des Faserverbundstoffs im Trägerkörper.

Sowohl die Folie als auch die Deckplatte bestehen vorzugsweise aus Kunststoff, die vorzugsweise ausgewählt sind aus Polymethylmethacrylat (PMMA), (z.B. Plexiglas® der Firma Evonik), Zelluloseacetat (z.B. Tenite® 105E1R26029), lonomer EMAA (z.B. Surlyn® PC2000 der Firma DuPont), thermoplastisches Elastomer auf Silikonbasis (z.B. Geniomer® 200 der Firma Wacker Silicones), thermoplastisches Polyurethan (z.B. Elastollan® 695A), cycloolefinisches Copolymer (z.B. Topas® 5013), amorphes Polyamid (z.B. Grilamid® TR90), Polycarbonat (z.B. Makrolon® 6555). Die obigen transparenten Kunststoffe weisen eine hohe optische Güte mit hohem Transmissionsgrad, geringer Trübung und hoher Klarheit auf. Insbesondere wenn Schmucksteine als dekorative Elemente verwendet werden, bleibt deren Brillanzeffekt bestmöglich erhalten, wenn sich die Brechungsindizes der Schmucksteine und der Folie bzw. Deckplatte möglichst stark unterscheiden. Diesbezüglich günstig sind Schmucksteine aus Kristallglas, da diese einen hohen Brechungsindex zwischen 1,54 und 1,58 aufweisen, während einige der oben erwähnten Polymerwerkstoffe weitaus niedrigere Brechungsindizes aufweisen, wie z.B. das Plexiglas® mit einem Brechungsindex von 1,498, das lonomer Surlyn® mit einem Brechungsindex von 1,50 oder das thermoplastische Silikonelastomer Geniomer® mit einem Brechungsindex von 1,43. Möglich ist auch, dass die Deckplatte aus Glas hergestellt ist.

Dabei hat sich überraschend herausgestellt, dass durch eine Folie oder eine Deckplatte aus PMMA ein besonders guter Schutz des im Trägerkörper angeordneten dekorativen Elements geboten wird und damit ein erfindungsgemäßer Verbundkörper zur Verfügung gestellt wird, der hinsichtlich Haftung der dekorativen Elemente und insbesondere hinsichtlich des Korrosionsverhaltens über die Maßen gute Ergebnisse liefert, sodass ein solcher Verbundkörper die eingebetteten dekorativen Elemente besser und dauerhafter gegen Umwelteinflüsse schützt als dies bei dekorativen Elementen der Fall ist, die in gebohrte Löcher oder in Kavitäten eingeklebt werden. Das Korrosionsverhalten ist dabei insofern relevant, als das dekorative Element metallische Komponenten umfassen kann. Bei Glas- oder Schmucksteinen kann dies dann zum Tragen kommen, wenn die im Trägerkörper angeordnete Oberfläche zur Erhöhung der Brillanz mit einer metallischen Spiegelschicht versehen oder similisiert ist.

Um diesen verbesserten Schutz nachzuweisen, sind mehrere Versuche durchgeführt worden, wobei als dekorative Elemente mehrere aus Kristallglas geschliffene Schmucksteine mit der Bezeichnung 1028 Cry F-foil pp14 Chatons in einen mit Harz imprägnierten karbonfaserverstärkten Trägerkörper eingesetzt worden sind und sowohl die Seite des Trägerkörpers, an der die Schmucksteine angeordnet sind, als auch die gegenüberliegende Seite mit einer PMMA-Folie verbunden worden ist, wobei dieser Materialverbund gemäß der Erfindung in einem gemeinsamen Pressvorgang entstanden ist. Die Prüfkörper waren plattenförmig und jeweils 40 mm x 25 mm groß und mit jeweils zehn Schmucksteinen versehen. Beim sogenannten Salzsprühtest (auch "Salzsprühnebelprüfung") gemäß DIN EN ISO 9227:2006-10 wurden die Proben mit Kochsalzlösung besprüht, um die Situation der Meerwasserbelastung oder der Umweltbelastung in einer großen Stadt zu simulieren. Dabei wurden die Proben in den Korrosionsprüfschrank (Fa. WEISS-KWT 450) gehängt und anschließend bei 35 °C einem Sprühnebel aus 5 Gew%-iger Kochsalzlösung ausgesetzt. Zur Verfolgung der Korrosionsvorgänge wurden die Muster nach 24, 48 bzw. 72 h entnommen, mit deionisiertem Wasser (Deionat) gespült, getrocknet und visuell begutachtet. Dabei hat sich herausgestellt, dass der Trägerkörper keine optische Veränderung erfahren hat, während sich bei einem Trägerkörper ohne PMMA-Folie ein fleckiges Erscheinungsbild ergeben hat. Insbesondere sind beim Prüfkörper mit PMMA-Abdeckung die Schmucksteine völlig intakt geblieben.

Weitere vorteilhafte Ausführungen der Erfindung sind in den abhängigen Ansprüchen definiert.

Als Kunststoffmaterialien für den Trägerkörper sind sowohl Duroplaste, wie z.B. Pulverlacke, als auch Thermoplaste bevorzugt geeignet. Dabei eignen sich prinzipiell Thermoplaste wie z.B. Polyamide (PA), Polycarbonate (PC), Polymethylmethacrylate (PMMA) und dergleichen.

Thermoplaste sind Kunststoffe, die sich in einem bestimmten Temperaturbereich reversibel verformen lassen. Durch Abkühlung und Wiedererwärmung bis in den schmelzflüssigen Zustand kann die Verformung beliebig oft wiederholt werden. Befindet sich der Thermoplast infolge einer Erwärmung in einem pastösen bis hin zu einem schmelzflüssigen Zustand, kann das dekorative Element besonders einfach im Trägerkörper angeordnet werden.

Bei einem Trägerkörper aus einem duroplastischen Ausgangsmaterial erfolgt bei einer Erwärmung eine Aufschmelzung bzw. Verflüssigung in einen schmelzflüssigen Zustand. Dabei bewirkt die Erwärmung eine Aushärtung des duroplastischen Ausgangsmaterials infolge einer chemischen Vernetzung durch Zufuhr thermischer Energie. Der Trägerkörper erstarrt unter Ausbildung einer stoffschlüssigen Verbindung mit dem dekorativen Element. Die Erstarrung entspricht dabei einer Aushärtung. Aushärtung bedeutet, dass zwischen den Edukten des duroplastischen Materials, vorzugsweise des Pulverlacks, neue Bindungen geschaffen werden und ein irreversibler Übergang vom flüssigen in den festen Zustand erfolgt. Duroplastische Kunststoffe sind erfindungsgemäß bevorzugt geeignet, da sie besonders temperaturstabil sind und sich der Verbundkörper auch bei höheren Umgebungstemperaturen nicht verformt.

Dem gegenüber erfolgt die Ausbildung der stoffschlüssigen Verbindung des dekorativen Elementes mit dem Trägerkörper bei einem thermoplastischen Material durch die Erstarrung des thermoplastischen Kunststoffes während des Abkühlens nach dem Ende der Wärmezufuhr. Im Gegensatz zu duroplastischen Systemen entstehen bei thermoplastischen Kunststoffen keine weiteren Bindungen, sondern die Festigkeit entsteht durch Abkühlen auf eine Temperatur unter der Erstarrungstemperatur. Mithin ist das dekorative Element mit aufgeschmolzenem und wieder erstarrtem Kunststoff des Trägerkörpers aus thermoplastischem Material stoffschlüssig verbunden.

Unter einer stoffschlüssigen Verbindung versteht man allgemein eine Verbindung, bei der die Verbindungspartner durch atomare oder molekulare Kräfte zusammengehalten werden. Insbesondere sind Klebeverbindungen stoffschlüssige Verbindungen.

Überraschend wurde gefunden, dass durch die Faserverstärkung eine besonders stabile Fixierung des dekorativen Elements im Trägerkörper hergestellt werden kann, wenn das dekorative Element im Bereich des faserverstärkten Kunststoffs mit dem Trägerkörper verbunden ist.

Eine ganz stabile und innige Verbindung ergibt sich, wenn für den faserverstärkten Kunststoff Pulverlack verwendet wird. Die Pulverlacke sind vorzugsweise ausgewählt aus den Epoxid-Pulverlacken (z.B. Freopox® PE7105), den Polyester-Pulverlacken (z.B. Freiotherm® PP1001), den Acrylat-Pulverlacken (z.B. Freocryl® PY1005), den Poylurethan-Pulverlacken (Freiotherm PU2005) sowie Hybrid-Pulverlacken und deren Abmischungen. Enthält die Kunststoffmatrix des faserverstärkten Kunststoffs Pulverlacke, vorzugsweise ausgewählt aus den angeführten Arten von Pulverlacken, kann durch die Aufschmelzung bzw. Verflüssigung und Aushärtung des Kunststoffs die stoffschlüssige Verbindung mit dem dekorativen Element ausgebildet werden, ohne die Notwendigkeit, auf die Oberfläche des dekorativen Elements gesondert Klebstoff aufbringen zu müssen.

Pulverlacke haben weiters den Vorteil lösungsmittelfrei und daher umweltverträglich zu sein. Zudem können Pulverlacke im pulverförmigen Rohzustand leicht verpresst und verarbeitet werden.

Auch bei Trägerkörpern aus faserverstärktem Kunststoff mit thermoplastischen Matrixmaterialien, wie z.B. sogenannten thermoplastischen Organoblechen (z.B. Tepex® Optilite der Firma Lanxess, beispielsweise in den Spezifikationen 408-C200(2)-FG490(4)/45% oder 108-FG290(X)/45% ergibt sich eine stabile stoffschlüssige Verbindung mit dem dekorativen Element durch die Aufschmelzung bzw. Verflüssigung und Erstarrung des Kunststoffs, ohne die Notwendigkeit auf die Oberfläche des dekorativen Elements gesondert Klebstoff aufbringen zu müssen. Zudem ergibt sich eine stabile Haftung zwischen der Folie bzw. der Deckplatte und dem Trägerkörper.

Insgesamt weisen sowohl Duroplaste, wie z.B. Pulverlacke, als auch Thermoplaste die notwendigen adhäsiven Eigenschaften für einen stabilen Halt des dekorativen Elements im Trägerkörper auf. Da das dekorative Element über seine gesamte Oberfläche, die im Trägerkörper angeordnet ist, mit diesem verbunden ist, wobei das Kunststoffmaterial des Trägerkörpers für die stoffschlüssige Verbindung sorgt, wird grundsätzlich eine äußerst stabile und innige Verbindung zwischen dem dekorativen Element und dem Trägerkörper realisiert.

Als faserverstärkte Kunststoffe können auch zahlreiche Prepregs eingesetzt werden. Dabei handelt es sich um einen einfach handhabbaren, sofort einsatzbereiten faserverstärkten Kunststoff, bei dem die Fasern (vor)imprägniert sind. Erfindungsgemäß besonders vorteilhaft ist der Einsatz lösungsmittelfreier Prepregs. Im Vergleich zu herkömmlichen duroplastischen Prepregs handelt es sich dabei um Prepregs, die selbst bei Raumtemperatur lagerfähig sind und einfach verarbeitet werden können.

Insbesondere sind Prepregs mit Pulverlack besonders lange bei Raumtemperatur lagerfähig, wobei bei Pulverlack-Prepregs auf ein Lösungsmittel verzichtet werden kann, sodass der Werkstoff physiologisch unbedenklich ist. Vorteilhaft ist insbesondere, dass derartige Prepregs als Rollenware zur Verfügung stehen und ohne Zugabe von Lösungsmitteln mechanisch einfach bearbeitet werden können. Prepregs als Abkürzung für "pre impregnated materials" sind mit Reaktionsharzmassen imprägnierte Faser-Flächenstoffe. Mit vielfältigen Möglichkeiten der Weiterverarbeitung stellen sie die ideale Basis für leichte und hochfeste Verbundkörper dar.Je nach verwendetem Pulverlack sind die Adhäsionseigenschaften sehr gut, sodass ein im Bereich des faserverstärkten Kunststoffs befestigtes dekoratives Element besonders stabil mit dem Trägerkörper verbunden ist. Anfangs befinden sich die Prepreg-Harze im reaktionsfähigen B-Zustand mit mittlerer bis hoher Viskosität. Die problemlose Weiterverarbeitung geschieht durch Energiezufuhr und gleichzeitige formgebende Maßnahmen. Dabei werden die niedermolekularen (noch schmelzbaren) Harze in den hochmolekularen, unschmelzbaren C-Zustand übergeführt. Im Falle einer Folie aus PMMA oder einer Deckplatte aus PMMA ergibt sich hierbei ein besonders guter Zusammenhalt des Prepregs mit der Folie.

Das dekorative Element insbesondere in Form eines Schmuck- oder Glassteins kann direkt stoffschlüssig mit dem Trägerkörper verbunden sein, wobei die stoffschlüssige Verbindung mit aufgeschmolzenem bzw. verflüssigtem und wieder erstarrtem Kunststoff ausgebildet sein kann. Der Schmuck- oder Glasstein kann dabei beispielsweise similisiert oder mit einer Spiegelschicht versehen sein. Bei Prepregs mit Pulverlack ergibt sich ein besonders stabiler stoffschlüssiger Verbund zwischen dem Tränkharz auf Pulverlackbasis und den Schmuck- oder Glassteinen.

Die Fasern des faserverstärkten Kunststoffes können unter anderem Kohlenstofffasern (Carbonfasern), Glasfasern, Naturfasern und/oder Aramidfasern sein. Weiters sind Basaltfasern oder Naturfasern wie z.B. Hanf, Flachs, Jute, Sisal, Kokos, Stroh, Heu und/oder Moosfasern denkbar. Ferner können auch Fasern aus Holz, Stoff, Papier, Karton und/oder Papyrus als Verstärkungsstoffe für den Kunststoff dienen. Auch Hybridgewebe, das heißt eine Mischung mehrerer Faserarten, kann für die Erfindung verwendet werden. Insbesondere bei Carbonfasern, die erfindungsgemäß verwendet werden, haben die Bereiche aus faserverstärktem Kunststoff eine hochwertige, dem technischen Zeitgeist entsprechende Optik und bieten einen 3D-Effekt, der bei Bewegen des Verbundkörpers hologrammartig wirkt. Zu diesem Zweck können verschiedene Webstrukturen und Webarten für die Fasern des faserverstärkten Bereiches vorgesehen sein. Möglich sind beispielsweise Leinwand-, Köper- und Atlasbindung. Diese Webarten können sowohl biaxial als auch unidirektional aufgebaut sein. Typische Flächengewichte für den faserverstärkten Kunststoffbereich liegen zwischen 30 und 500 g/m².

Sind im Trägerkörper eine Mehrzahl von dekorativen Elementen befestigt, können diese in einem gemeinsamen Bereich aus faserverstärktem Kunststoff angeordnet sein. Es kann auch vorgesehen sein, dass es mehrere Bereiche aus faserverstärktem Kunststoff gibt, in denen jeweils ein oder mehrere dekorative Elemente angeordnet sind.

Bei einem dekorativen Element in Form eines Schmucksteins kann es sich um einen, vorzugsweise mit Facetten versehenen, geschliffenen, natürlichen oder synthetischen Edelstein oder Glasstein handeln. Glassteine haben dabei den Vorteil einer kostengünstigen Herstellung, die im Falle eines hochwertigen Kristallglases als optisch hochwertiger Ersatz für Edelsteine angesehen werden. Es kann auch vorgesehen sein, dass die Oberfläche des Schmucksteins, die im Trägerkörper angeordnet ist mit einer Verspiegelung bzw. einer Spiegelschicht versehen oder similisiert ist. Diese Verspiegelung kann beispielswiese mittels PVD oder CVD angebracht werden.

Bei Schmucksteinen mit einer Rondiste, die jenen Bereich umrandet, der zwischen Oberteil und Unterteil des Schmucksteins liegt und in dem der Schmuckstein seine größte Umfangsausdehnung aufweist oder bei einer Kante zwischen Oberteil und Unterteil, kann vorgesehen sein, dass der Schmuckstein bis über die Rondiste oder diese Kante hinaus im Trägerkörper angeordnet ist, sodass im Endzustand die Rondiste oder diese Kante klammerartig vom Trägerkörper umgriffen ist, wodurch sich ein besonders fester Halt ergibt. Dabei kann vorgesehen sein, den Schmuckstein oder generell das dekorative Element nur derart weit im Trägerkörper anzuordnen, dass Teile davon reliefartig aus dem Trägerkörper hervorstehen. Es kann aber auch vorgesehen sein, die äußere Oberfläche des Schmucksteins oder generell des dekorativen Elementes bündig mit der Oberfläche des Trägerkörpers abzuschließen oder sogar den Schmuckstein bzw. das dekorative Element unterhalb der äußeren Oberfläche des Trägerkörpers zu fixieren, sodass oberhalb des Schmucksteins bzw. dekorativen Elementes Kavitäten verbleiben.

In einer Ausführungsform der Erfindung ist die am Trägerkörper anzuordnende Folie oder Deckplatte beispielsweise mit Motiven bedruckt, wobei jene Bereiche der Folie bzw. der Deckplatte nicht bedruckt sind, in denen die im Trägerkörper angeordneten dekorativen Elemente erblickt werden können. Im Falle einer Folie bzw. Deckplatte, auf der von den dekorativen Elementen abgewandten Seite des Trägerkörpers ist ebenfalls eine Verzierung mittels einer Bedruckung möglich. Als Druckverfahren kommen im Stand der Technik bekannte Verfahren, wie z.B. Digitaldruck in Frage.

In einer Ausführungsform der Erfindung ist die vorzugsweise aus PMMA bestehende Folie oder Deckplatte, die auf jener Seite des Trägerkörpers angeordnet wird, an welcher das wenigstens eine dekorative Element angeordnet ist, mit einer eine andere Elastizität aufweisenden Folie verbunden. Beispielsweise ist auf einer aus PMMA bestehenden Folie eine Folie aus Surlyn® oder aus Geniomer® im Laminationsverbund angeordnet. Surlyn® und Geniomer® weisen eine höhere Elastizität auf als PMMA-Folien, die eher spröde und unflexibel sind. Durch den Verbund mit einer Folie mit höherer Elastizität, wie im obigen Beispiel Surlyn® oder Geniomer®, wird der erfindungsgemäße Verbundkörper elastischer und flexibler und ist besser vor Stoßeinwirkungen geschützt.

Die Erfindung betrifft weiters ein Verfahren zur Herstellung eines wie oben beschriebenen Verbundkörpers.

In einem ersten Schritt wird der plattenförmige Trägerkörper z.B. in einem Ofen auf eine erste Temperatur erhitzt. Durch das Erhitzen wird der Kunststoff des plattenförmigen Trägerkörpers aufgeschmolzen und pastös oder teilweise flüssig und kann zumindest in einem gewissen Ausmaß verformt und umgeschichtet werden. Bei duroplastischen Materialien erfolgt dabei eine Aushärtung. Dabei kann der Trägerkörper auf eine Temperatur zwischen 90 bis 250°C, vorzugsweise zwischen 120 und 220°C und ganz vorzugsweise zwischen 130 und 180°C erhitzt werden.

In einem nächsten Schritt wird das wenigstens eine dekorative Element mit dem plattenförmigen Trägerkörper verpresst, wobei in Folge des pastösen oder teilweise flüssigen Zustandes des Kunststoffs das dekorative Element in den plattenförmigen Trägerkörper hineingedrückt wird und dabei das Material des plattenförmigen Trägerkörpers lokal umgeschichtet bzw. verdichtet wird. Der Druck mit dem das dekorative Element mit dem Trägerkörper verpresst wird kann beispielsweise rund 0,01-1 kN/cm² vorzugsweise 0,02-0,5 kN/cm² und besonders bevorzugt 0,03-0,2 kN/cm² betragen. Vorzugsweise werden für die Verpressung des dekorativen Elements mit dem plattenförmigen Trägerkörper metallische Presswerkzeuge mit hoher Oberflächengüte verwendet.

Aufgrund des pastösen oder teilweise flüssigen Zustandes des Trägerkörpers kann sich die Kunststoffmatrix an die Oberfläche des dekorativen Elements legen, sodass sich in einem weiteren Schritt eine stoffschlüssige Verbindung zwischen dem dekorativen Element und dem plattenförmigen Trägerkörper ausbildet. Dadurch kann das wenigstens eine dekorative Element mit sehr wenigen Arbeitsschritten mit dem plattenförmigen Trägerkörper verbunden werden, wobei es insbesondere nicht notwendig ist, das dekorative Element gesondert mit Klebstoff zu versehen, da der Kunststoff des Trägerkörpers selbst als Klebstoff dient. Bei duroplastischen Materialien kann sich die stoffschlüssige Verbindung bereits durch die Aushärtung während des Erhitzens ausbilden. Bei thermoplastischen Materialien bildet sich die stoffschlüssige Verbindung mit dem plattenförmigen Trägerkörper durch Erstarrung infolge des Abkühlens des Verbundkörpers.

Es kann vorteilhaft sein, den Trägerkörper vor dem Erhitzen auf die erste Temperatur vorzuwärmen. Beispielsweise kann dieses Vorwärmen bei einer Vorwärmtemperatur von rund 130° C erfolgen und/oder für eine Zeit von rund einer Stunde andauern.

In einer weiteren Ausführungsform des erfindungsgemäßen Verfahrens wird der Trägerkörper während des Verpressens auf eine Temperatur oberhalb der ersten Temperatur erhitzt. Dieser Erhitzungsvorgang kann beispielsweise bei einer Temperatur von 120 bis 280°C erfolgen.

Um Spannungen im Verbundkörper zu verringern, werden die Verbundkörper im erfindungsgemäßen Verfahren bevorzugt graduell erwärmt und ebenso wird der Druck graduell erhöht. Die maximale Temperatur liegt je nach Kunststoff bei 120°C bis 280°C.

Beim Abkühlen bildet sich eine stoffschlüssige Verbindung zwischen dem dekorativen Element und dem aufgeschmolzenen und wieder erstarrten bzw. ausgehärteten Kunststoff des Trägerkörpers aus. Dieses Abkühlen kann unter Aufrechterhaltung eines Pressdrucks erfolgen, indem das Abkühlen erfolgt, während der Verbundkörper sich noch innerhalb des Presswerkzeugs befindet.

In einer Ausführungsform werden vor dem Verpressen eine oder mehrere Kavitäten für das oder die dekorativen Elemente im Aufnahmebereich des Trägerkörpers vorgeformt, wodurch das Eindrücken der dekorativen Elemente in den Trägerkörper erleichtert wird.

Während des Verpressens können in einer weiteren Ausführungsform das oder die dekorativen Elemente an einer Folie gehalten werden, wodurch sich eine besonders einfache Herstellungsart eines Verbundkörpers mit Folie über dem dekorativen Element ergibt. Diese Folie wird in Folge dieses Verpressens ebenfalls mit dem Trägerkörper verbunden. In diesem Fall wird die mit dem Trägerkörper zu verbindende Folie als Transferfolie verwendet, mit der die dekorativen Elemente zum Trägerkörper verbracht werden. Alternativ kann eine von dieser Folie gesonderte Transferfolie verwendet werden, die nach dem Transfer der dekorativen Elemente zum Trägerkörper von den dekorativen Elementen wieder entfernt wird, woraufhin die mit dem Trägerkörper zu verbindende Folie und der Trägerkörper verpresst werden.

Dabei kann die Folie ebenso wie das dekorative Element mit dem Trägerkörper, insbesondere mit dem aufgeschmolzenen und wieder erstarrten bzw. ausgehärteten Kunststoff des Trägerkörpers eine stoffschlüssige Verbindung eingehen. Zusätzlich oder alternativ kann auch die Folie selbst aufschmelzen und wieder erstarren und dadurch mit dem Trägerkörper fix verbunden werden. Die Folie kann aber auch nachträglich auf dem Trägerkörper mit den bereits zumindest teilweise eingepressten dekorativen Elementen angeordnet werden.

Weiters kann vorgesehen sein, das oder die dekorativen Elemente gleichzeitig mit einer Deckplatte mit dem plattenförmigen Trägerkörper zu verpressen. Diese Deckplatte kann als Schutzplatte ebenso wie die oben beschriebene Folie direkt auf den Trägerkörper oder direkt auf diese Folie aufgebracht werden.

Weitere Einzelheiten und Vorteile der vorliegenden Erfindung werden anhand der Figurenbeschreibung unter Bezugnahme auf die Zeichnungen im Folgenden näher erläutert. Darin zeigt:
- Fig. 1: eine schematische Darstellung zur Herstellung eines erfindungsgemäßen Verbundkörpers,
- Fig. 2: eine weitere schematische Darstellung zur Herstellung eines erfindungsgemäßen Verbundkörpers,
- Fig. 3: eine Querschnittsdarstellung eines erfindungsgemäßen Verbundkörpers,
- Fig. 4a: eine weitere schematische Darstellung zur Herstellung einer anderen Ausführungsform eines erfindungsgemäßen Verbundkörpers,
- Fig. 4b: eine Querschnittsdarstellung dieser Ausführungsform des erfindungsgemäßen Verbundkörpers und
- Fig. 5 bis 11: schematische Darstellungen zur Herstellung verschiedener Ausführungsformen eines erfindungsgemäßen Verbundkörpers.

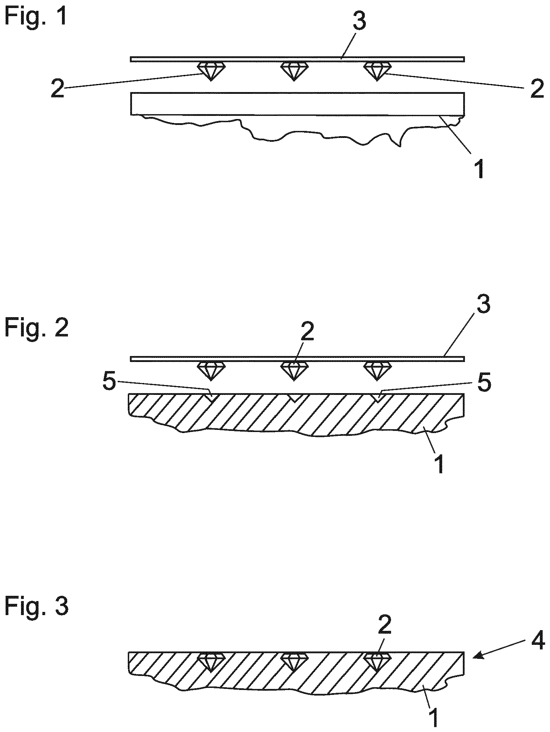

Figur 1 zeigt eine schematische Darstellung zur Herstellung eines erfindungsgemäßen Verbundkörpers 4 mit einem aus faserverstärktem Kunststoff bestehenden Trägerkörper 1, in dem eine Mehrzahl von dekorativen Elementen 2 in Form von Schmucksteinen 2 angeordnet wird. Im vorliegenden Fall ist der gesamte Trägerkörper plattenförmig und aus einem faserverstärkten Kunststoff bestehend. Die Schmucksteine 2 werden mittels der Folie 3, die in diesem Fall auch als Transferfolie dient, zum Trägerkörper 1 bewegt. Dabei sind die Schmucksteine 2 auf der Folie 3 vorfixiert. Nach Erwärmen des Trägerkörpers werden die Schmucksteine 2 mit dem Trägerkörper 1 verpresst und bilden den erfindungsgemäßen Verbundkörper 4. Aus Gründen der Übersichtlichkeit sind die im Stand der Technik an sich bekannten Heizmittel und Presswerkzeuge für die Erwärmung und das Verpressen in den gezeigten Figuren nicht bzw. nur schematisch dargestellt.

Nach Erstarren des aufgeschmolzenen Kunststoffs des Trägerkörpers 1 sind die Schmucksteine 2 äußerst stabil und innig mit diesem verbunden. In diesem Zustand kann die beispielsweise aus PMMA bestehende Folie 3 wieder entfernt werden. Es kann aber auch vorgesehen sein, dass die Folie 3 zum Schutz oder aus dekorativen Gründen am Verbundkörper 4 verbleibt.

In Figur 2 ist eine weitere Darstellung zur Herstellung eines erfindungsgemäßen Verbundkörpers 4 gezeigt, die sich dahingehend von Figur 1 unterscheidet, dass in den Trägerkörper 1 vorab Kavitäten 5 z.B. geformt worden sind, die zur Erleichterung des Eindrückens der Schmucksteine 2 dienen. Während des Verpressens der Schmucksteine 2 muss weniger aufgeschmolzenes bzw. zumindest teilweise flüssiges Kunststoffmaterial des Trägerkörpers 1 umgeschichtet werden, welches nach Wiedererstarren stoffschlüssig mit den Schmucksteinen 2 verbunden ist.

Wie anhand der Figur 3 ersichtlich ist, die einen gemäß Fig. 1 oder Fig. 2 hergestellten Verbundkörper 4 in einer Querschnittsdarstellung zeigt, sind die vorgeformten Kavitäten 5 im fertig hergestellten Verbundkörper 4 nicht mehr erkennbar.

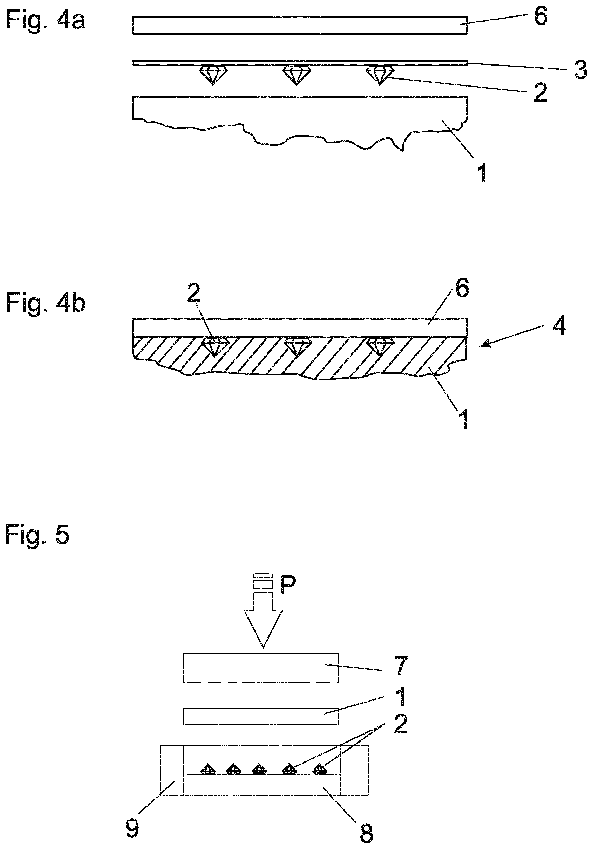

In Figur 4a ist eine schematische Darstellung zur Herstellung einer weiteren Ausführungsform eines erfindungsgemäßen Verbundkörpers 4 gezeigt. In diesem Fall wird der Trägerkörper 1 zusätzlich mit einer Deckplatte 6 aus transparentem Kunststoff verbunden. Im gezeigten Fall werden zunächst die Schmucksteine 2 mittels einer als Transferfolie dienenden Folie 3 mit dem Trägerkörper 1 verpresst. Anschließend wird die Folie 3 abgezogen und die Deckplatte 6 an den Trägerkörper 1 geklebt. Zu diesem Zweck ist vorgesehen, dass die Deckplatte 6 durch aufgeschmolzenen und wieder erstarrten Kunststoff des Trägerkörpers 1 stoffschlüssig mit diesem verbunden ist. Diese Ausführungsform des erfindungsgemäßen Verbundkörpers 4 ist als Querschnittsdarstellung in Figur 4b dargestellt.

Alternativ kann auch vorgesehen sein, dass die Folie 3 im Verbundkörper 4 verbleibt und die Deckplatte 6 gemeinsam mit den Schmucksteinen 2 und der Folie 3 mit dem Trägerkörper 1 verpresst wird.

Die Verbindung der Schmucksteine 2 mit dem Trägerkörper 1 und der Deckplatte 6 und gegebenenfalls mit der Folie 3 kann in einem einzigen Pressschritt erfolgen.

Figur 5 zeigt in einer schematischen Darstellung wie in Form von Schmucksteinen 2 ausgebildete dekorative Elemente 2 in einen Trägerkörper 1 mittels eines Heißpressverfahrens eingebettet werden. Der Trägerkörper 1 besteht dabei aus einer faserverstärkten Verbundplatte oder aus einer oder mehreren Prepreg-Schichten.

### Vorbereitung und Verfahrensablauf:

Nach dem Vorbehandeln der Pressmetallform 7,8 an sämtlichen Kontaktflächen mittels Trennspray werden die Schmucksteine 2 in gewünschter Lage und Position auf dem Unterstempel 8 aufgelegt und der auf die Formfläche zugeschnittene Trägerkörper 1 in Form einer Verbundplatte aus Prepregs (ein- oder mehrlagig) in die Form 7, 8 sorgfältig eingelegt und dabei auf den Schmucksteinen 2 platziert. Danach wird die Form 7,8 durch langsames Anbringen des Oberstempels 7 geschlossen. Die geschlossene Form 7, 8 wird in die Heißpresse 9 gegeben und noch drucklos auf 110°C erwärmt. Bei Erreichen dieser Vorwärmtemperatur wird erstmals minimaler spezifischer Pressdruck p von 0,05 kN/cm² angelegt, damit die Schmucksteine 2 in den bereits ein wenig plastisch gewordenen Trägerkörper 1 eindringen können und somit für den weiteren Prozess nun vorfixiert sind.

Danach erfolgt weiteres Aufheizen der Form 7,8 auf die Pulverlack-spezifische Einbrenntemperatur (z.B. 180°C) bei noch immer anliegendem Pressdruck p von 0,05 kN/cm² für die Dauer von 5 - 10 Minuten. In Folge wird die Form 7, 8 auf ca. 150°C abgekühlt und dann einem konstantem Pressdruck p von 0,1 kN/cm² unterzogen. Die Werkzeugtemperatur wird bei dieser Druckeinstellung weiterhin gesenkt bis ca. 70°C erreicht sind. Anschließend kann der Verbundkörper 4 ausgeformt werden.

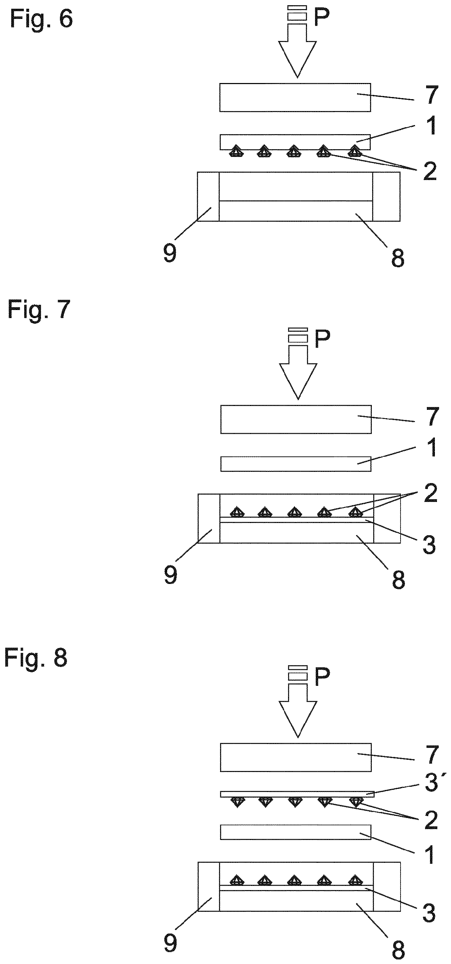

Figur 6 zeigt eine schematische Darstellung wie in Form von Schmucksteinen 2 ausgebildete dekorative Elemente 2 in einen Trägerkörper 1 mittels eines Heißpressverfahrens eingebettet werden. Der Trägerkörper 1 besteht dabei aus einer faserverstärkten Verbundplatte oder aus einer oder mehreren Prepreg-Schichten, wobei der Trägerkörper 1 mit Kavitäten 5 versehen ist.

### Vorbereitung und Verfahrensablauf:

Nach dem Vorbehandeln der Pressmetallform an sämtlichen Kontaktflächen mittels Trennspray werden die Schmucksteine 2 in gewünschter Lage und Position in die Platten-/Prepreg-Kavitäten 5 eingelegt und der bestückte Trägerkörper 1 in die Form 7,8 sorgfältig umgesetzt. Danach wird die Form 7,8 durch Anbringen des Oberstempels 7 geschlossen. Die geschlossene Form 7,8 wird in die Heißpresse 9 gegeben und noch drucklos auf 110°C erwärmt. Bei Erreichen dieser Vorwärmtemperatur wird erstmals minimaler spezifischer Pressdruck p von 0,05 kN/cm² angelegt, damit die Schmucksteine 2 in den bereits ein wenig plastisch gewordenen Trägerkörper 1 noch mehr eindringen können und somit für den weiteren Prozess fixiert sind.

Danach erfolgt ein weiteres Aufheizen der Form 7,8 auf die Pulverlack-spezifische Einbrenntemperatur (z.B. 180°C) bei noch immer anliegendem Pressdruck p von 0,05 kN/cm² für die Dauer von 5 - 10 Minuten. In Folge wird die Form 7,8 auf ca. 150°C abgekühlt und dann einem konstanten Pressdruck p von 0,1 kN/cm² unterzogen. Die Werkzeugtemperatur wird bei dieser Druckeinstellung weiterhin gesenkt bis ca. 70°C erreicht sind. Anschließend kann der Verbundkörper 4 ausgeformt werden.

Im Falle eines Trägerkörpers 1 aus einem thermoplastischen Organoblech erfolgt ein Aufheizen der Form 7, 8 auf die für den jeweiligen thermoplastischen Kunststoff spezifische Erweichungstemperatur von z.B. 165° C bei einer Druckerhöhung auf einen Pressdruck p von 0,5 kN/cm² für die Dauer von fünf bis zehn Minuten. In Folge wird die Form 7, 8 auf ca. 120° C abgekühlt und einem konstanten Pressdruck p von 0,5 kN/cm² unterzogen. Die Werkzeugtemperatur wird bei dieser Druckeinstellung weiterhin gesenkt bis ca. 70° C erreicht sind. Anschließend kann der Verbundkörper 4 mit thermoplastischen Trägerkörper 1 ausgeformt werden.

Figur 7 zeigt eine schematische Darstellung einer anderen Art der Einbettung von in Form von Schmucksteinen 2 ausgebildeten dekorativen Elementen 2 in einen Trägerkörper 1 mittels eines Heißpressverfahrens. Der Trägerkörper 1 besteht dabei aus einer faserverstärkten Verbundplatte oder aus einer oder mehreren Prepreg-Schichten, wobei die Schmucksteine 2 auf einer Folie 3 fixiert sind.

### Vorbereitung und Verfahrensablauf:

Nach dem Vorbehandeln der Pressmetallform 7, 8 an sämtlichen Kontaktflächen mittels Trennspray wird die Folie 3 mit den vorfixierten Schmucksteinen 2 in die Form 7, 8 auf den Unterstempel 8 eingelegt. Das Fixieren der Schmucksteine 2 auf der Folie 3 kann mittels Klebe- oder Lackschicht geschehen. Alternativ kann statt der Folie 3 auch eine Deckplatte 6 verwendet werden. Die Folie 3 oder die Deckplatte 6 die in das Bauteil integriert wird, soll sich zwecks Gesamterscheinungsbild durch hohe Transparenz und optische Güte auszeichnen.

Der auf die Formfläche zugeschnittene Trägerkörper 1 in Form einer Verbundplatte aus Prepregs (ein- oder mehrlagig) wird sorgfältig in die Form 7, 8 auf die Schmucksteine 2 eingelegt und die Form 7, 8 durch Anbringen des Oberstempels 7 geschlossen. Die geschlossene Form 7, 8 wird in die Heißpresse 9 gegeben und noch drucklos auf 110°C erwärmt. Bei Erreichen dieser Vorwärmtemperatur wird erstmals minimaler spezifischer Pressdruck p von 0,05 kN/cm² angelegt, damit die Schmucksteine 2 in den bereits ein wenig plastisch gewordenen Trägerkörper 1 noch mehr eindringen können und somit für den weiteren Prozess fixiert sind. Im Falle eines thermoplastischen Trägerkörpers 1 wird die geschlossene Form 7, 8 in der Heißpresse 9 drucklos auf 125° C erwärmt.

Danach erfolgt weiteres Aufheizen der Form auf die Pulverlack-spezifische Einbrenntemperatur (z.B. 180°C) bei noch immer anliegendem Pressdruck p von 0,05 kN/cm² für die Dauer von 5 - 10 Minuten. In Folge wird die Form 7, 8 auf ca. 150°C abgekühlt und dann einem konstantem Pressdruck p von 0,1 kN/cm² unterzogen. Die Werkzeugtemperatur wird bei dieser Druckeinstellung weiterhin gesenkt bis ca. 70°C erreicht sind. Anschließend kann der Verbundkörper 4 ausgeformt werden. Nach diesem Fertigungsschritt kann die Folie 3 entweder abgezogen werden oder sie verbleibt auf dem Trägerkörper 1.

Im Falle eines thermoplastischen Trägerkörpers 1, beispielsweise eines thermoplastischen Organoblechs, erfolgt weiteres Aufheizen der Form 7, 8 auf die für den jeweiligen thermoplastischen Kunststoff spezifische Erweichungstemperatur von z.B. 180° C bei erhöhtem Pressdruck p von 0,4 kN/cm² für die Dauer von fünf bis zehn Minuten. In Folge wird die Form 7, 8 auf ca. 120° C abgekühlt und dann einem konstanten Pressdruck p von 0,4 kN/cm² unterzogen. Die Werkzeugtemperatur wird bei dieser Druckeinstellung weiterhin gesenkt bis ca. 70° C erreicht sind. Anschließend kann der Verbundkörper 4 ausgeformt werden, wobei die Folie 3 mit dem thermoplastischen Trägerkörper 1 in Folge des Pressvorgangs verbunden ist bzw. in diesen integriert ist.

Als weiterführende Variante wird der Aufbau der zu verpressenden Schichten aufgrund von möglichen, späteren Verzugsproblemen im Bauteil symmetrisch vorgenommen:
Figur 8 zeigt eine schematische Darstellung eines Verfahrens, bei dem Schmucksteine 2 symmetrisch auf gegenüberliegenden Seiten eines plattenförmigen Trägerkörpers 1 angeordnet werden. In diesem Fall werden Schmucksteine 2 auf zwei Folien 3, 3' fixiert. Während die Folie 3 wie im Beispiel gemäß Figur 7 auf den Unterstempel 8 eingelegt wird, wird die Folie 3' auf dem Oberstempel 7 fixiert. Anschließend wird - wie in den vorigen Beispielen - der Trägerkörper 1 in die Form 7, 8 eingelegt, woraufhin die Form 7, 8 durch Anbringen des Oberstempels 7 geschlossen wird.

In den folgenden Ausführungsformen der Erfindung werden die dekorativen Elemente 2 in Form von Schmucksteinen 2 im Gegensatz zu den vorbeschriebenen Ausführungsformen nicht in den faserverstärkten Bereich 10 des Trägerkörpers 1 angeordnet.

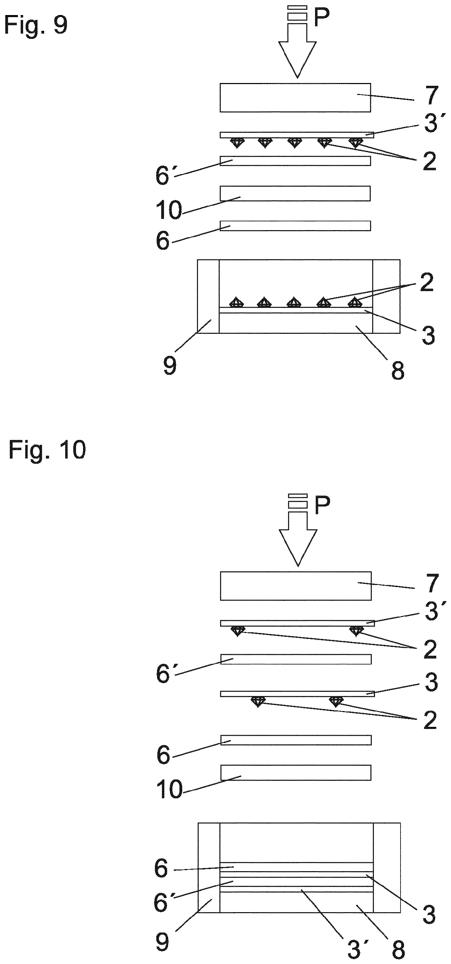

Die schematische Darstellung gemäß Figur 9 zeigt ein Herstellungsverfahren bei dem eine faserverstärkte Verbundplatte 10 oder eine oder mehrere Prepreg-Schichten mit zwei Deckplatten 6, 6' aus PMMA zu einem Trägerkörper 1 verbunden werden. Statt der Deckplatten 6, 6' können auch eine oder mehrere Schichten Kunststofffolien mit dem Bereich 10 aus faserverstärktem Kunststoff zum Trägerkörper 1 zusammengesetzt werden. Die Verbindung der Deckplatten 6, 6' mit dem Bereich 10 kann im gleichen Pressschritt erfolgen, bei dem die Schmucksteine 2 mit dem Trägerkörper 1 verbunden werden. Dabei werden die Deckplatten 6, 6' stoffschlüssig mit aufgeschmolzenem und wieder erstarrtem Kunststoff des Bereichs 10 verbunden.

### Vorbereitung und Verfahrensablauf:

Nach dem Vorbehandeln der Pressmetallform 7, 8 an sämtlichen Kontaktflächen mittels Trennspray werden die Folien 3, 3' mit den vorfixierten Schmucksteinen 2 in die Form 7, 8 auf den Unterstempel 8 bzw. Oberstempel 7 eingelegt. Sämtliche Trägerelemente wie Folien 3, 3' und Platten 6, 6', die in den Verbundkörper 4 integriert werden, sollen sich zwecks Gesamterscheinungsbild durch hohe Transparenz und optische Güte auszeichnen.

Die auf die Formfläche zugeschnittenen Folien 3, 3' und Platten 6, 6' sowie der Bereich 10 aus faserverstärktem Kunststoff werden im gewünschten symmetrischen Sandwich-Schichtaufbau sorgfältig in die Form 7, 8 eingelegt, welche durch Anbringen des Oberstempels 7 geschlossen wird. Die geschlossene Form 7, 8 wird in die Heißpresse 9 gegeben und noch drucklos auf 90 - 110°C erwärmt. Bei Erreichen dieses Vorwärmtemperaturbereichs wird erstmals minimaler spezifischer Pressdruck p von 0,05 kN/cm² angelegt, damit die Schmucksteine 2 in die bereits ein wenig plastisch gewordenen Deckplatten 6, 6' noch mehr eindringen können und somit für den weiteren Prozess fixiert sind.

Danach erfolgt weiteres Aufheizen der Form 7, 8 auf die Pulverlack-spezifische Einbrenntemperatur (z.B. 160°C) bei noch immer anliegendem Pressdruck p von 0,05 kN/cm² für die Dauer von 5 - 10 Minuten. In Folge wird die Form auf ca. 130°C abgekühlt und dann einem konstantem Pressdruck p von ca. 0,4 kN/cm² unterzogen. Die Werkzeugtemperatur wird bei dieser Druckeinstellung weiterhin gesenkt bis ca. 70°C erreicht sind. Anschließend kann der Verbundkörper 4 ausgeformt werden.

Als weiterführende Variante kann der Aufbau der zu verpressenden Schichten auch mit Zwischenlagen aus bedrucktem Papier oder Dekorfolien erfolgen.

Die schematische Darstellung gemäß Figur 10 betrifft eine Herstellung einer weiteren Ausführungsform eines erfindungsgemäßen Verbundkörpers 4. In diesem Fall besteht der Trägerkörper 1 aus einem Bereich 10 mit faserverstärktem Kunststoff in Form einer Verbundplatte oder einer oder mehreren Prepreg-Schichten. Dieser Bereich 10 wird beim Verpressen mit zwei Deckplatten 6 aus PMMA verbunden. An die Außenseiten der Deckplatten 6 wird jeweils eine Folie 3 mit daran fixierten Schmucksteinen 2 verpresst. An die Außenseiten der Folien 3 wird jeweils eine weitere Deckplatte 6' aus PMMA verpresst. An die Außenseite der weiteren Deckplatten 6' wird jeweils eine weitere Folie 3' mit daran fixierten Schmucksteinen 2 verpresst. Bei den am Unterstempel 8 angeordneten Folien 3, 3' sind die Schmucksteine 2 der Übersicht halber nicht dargestellt. In der Heißpresse 9 werden all diese Schichten miteinander verpresst, wobei sich infolge des Pressdrucks p und der Erwärmung eine stoffschlüssige Verbindung zwischen diesen Bauteilen ausbildet. Die Deckplatten 6, 6' und die Folien 3, 3' sind transparent ausgebildet damit die Schmucksteine 2 zur Geltung kommen.

In den Ausführungsformen gemäß der Fig. 8, 9 und 10 kann ebenso ein Trägerkörper 1 aus faserverstärktem thermoplastischen Kunststoff, beispielsweise ein thermoplastisches Organoblech, verwendet werden, wobei ähnliche Parameter wie zu Fig. 7 beschrieben verwendet werden.

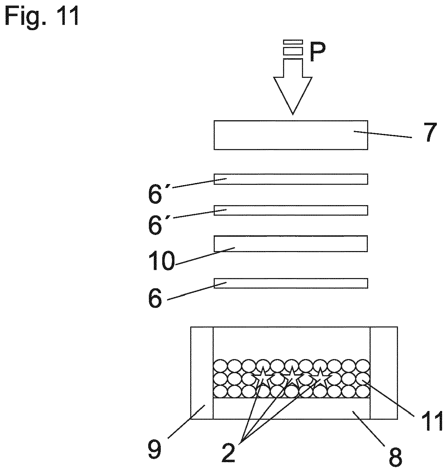

Figur 11 zeigt schematisch ein Herstellungsverfahren für eine weitere Ausführungsform eines erfindungsgemäßen Verbundkörpers 4, wobei dekorative Elemente 2, beispielsweise facettiert geschliffene Schmucksteine 2 mittels eines Heißpressverfahrens mit einem Trägerkörper 1 aus Kunststoff verbunden werden, der zumindest bereichsweise aus faserverstärktem Kunststoff besteht.

Dabei werden die dekorativen Elemente 2 mit einem vorzugsweise aus PMMA bestehenden transparenten Kunststoffgranulat 11 in eine Form in geordneter oder in vorfixierter Weise eingelegt, die ihrerseits auf den Unterstempel 8 des Presswerkzeugs angeordnet wird. Ein Bereich 10 aus faserverstärktem Kunststoff, beispielsweise eine Verbundplatte oder eine oder mehrere Prepreg-Schichten, wird während des Pressvorgangs auf beiden Seiten mit jeweils einer Deckplatte 6, 6' aus PMMA verbunden. Alternativ können statt der Deckplatten 6, 6' auch starke Folien verwendet werden. Auf der dem Kunststoffgranulat 11 gegenüberliegenden Seite des Bereichs 10 können auch mehrere Platten 6' verwendet werden, um einen Symmetrieausgleich zum Bereich mit den dekorativen Elementen 2 zu ermöglichen.

Das Granulat 11 ist z.B. etwa 3 mm lang und hat einen Durchmesser von ca. 4 mm und stammt aus der herkömmlichen Kunststoff-Spritzguss- und Extrusionsverarbeitung. Die Verarbeitungstemperatur liegt zwischen 220 - 260°C. Das Granulat 11 wird mit einer Heißpresse 9 verarbeitet. Es können dekorative Elemente 2 in einer entsprechenden Menge PMMA-Granulat 11 einerseits gemischt und bestmöglich schwimmend im Presswerkzeug verteilt werden (Fall 1). Alternativ ist eine Positionierung mit den zuvor beschriebenen Trägerfolien 3 und Fixierhilfen in einer Pressform am Stempel möglich, woraufhin das Presswerkzeug mit PMMA-Granulat 11 aufgefüllt wird (Fall 2). Für die Verarbeitung des PMMA-Granulats 11 wird eine Temperatur von 200 - 230°C in Verbindung mit einem spezifischen Pressdruck p von ca. 1 kN/cm² benötigt, um Korngrenzen des aufgeschmolzenen Granulats im Verbundkörper zu vermeiden.

Dabei zeigt sich, dass nicht nur Schmucksteine 2 in einem Pressverfahren mit PMMA-Granulat 11, sondern auch filigranere Elemente bis hin zu dekorativen Elementen organischer Herkunft, wie z.B. Moos oder getrocknete Blüten weitestgehend unbeschadet eingebettet werden können und sich ein wirksamer Tiefeneffekt beim fertiggestellten Verbundkörper 4 einstellt.

Statt PMMA-Granulat 11 kann auch PMMA-Feinstpulver, beispielsweise mit einer Korngröße zwischen 0,4 mm und 0,6 mm für das oben beschriebene Verfahren verwendet werden, wobei ein derartiges Feinstpulver Vorteile aufgrund einer kürzeren Verarbeitungszeit aufweist und somit kürzere Zykluszeiten ermöglicht. Ferner ergibt sich bei Feinstpulver eine bessere Benetzung dichter Strukturen ohne Luftblaseneinschlüsse, was der Optik des fertiggestellten Verbundkörpers 4 zuträglich ist.

### Verfahrensablauf:

Nach dem Vorbehandeln der Pressmetallform 7, 8 an sämtlichen Kontaktflächen mittels Trennspray wird im Fall 1 eine Mischung aus PMMA-Granulat 11 und gegebenenfalls homogen verteilten dekorativen Elementen 2 in die offene Pressform 7, 8 gefüllt und der Oberstempel 7 zur Schließung der Form 7, 8 angebracht.

Im Fall 2 wird die mit den dekorativen Elementen 2 versehene Trägerfolie 3 bzw. die Elemente 2 dicht auf der Werkzeugformoberfläche angebracht und die offene Pressform 7, 8 mit PMMA-Granulat 11 befüllt, woraufhin der Oberstempel 7 zur Schließung der Form 7, 8 angebracht wird.

In beiden Fällen wird anschließend die geschlossene Form 7, 8 in der Presse 9 zunächst noch drucklos auf ca. 90 - 110°C aufgeheizt. Bei Erreichen dieser Vorwärmtemperatur wird ein Minimaldruck p von 0,05 kN/cm² eingestellt. Danach erfolgt weiteres Aufheizen der Form 7, 8 unter diesem Druck auf ca. 200 - 230°C. Bei Erreichen der Maximaltemperatur wird die Form 7, 8 bei 0,05 kN/cm² auf 130°C abgekühlt, ab dieser Abkühltemperatur wird mit einem Hauptdruck von 1 kN/cm² weiter gefahren bis zur Ausform-Temperatur von ca. 90 - 70°C. Die Druckbeaufschlagung wird abgeschaltet und der Verbundkörper 4 kann handwarm ausgeformt werden.

## Patentansprüche

1. Dekorativer Verbundkörper (4) enthaltend einen plattenförmigen Trägerkörper (1) aus Kunststoff und wenigstens ein im Trägerkörper (1) befestigtes dekoratives Element (2), wobei der Trägerkörper (1) zumindest bereichsweise aus einem faserverstärktem Kunststoff besteht, und wobei das dekorative Element (2) mit aufgeschmolzenem bzw. zumindest teilweise verflüssigtem und wieder erstarrtem Kunststoff des plattenförmigen Trägerkörpers (1) stoffschlüssig verbunden ist, **dadurch gekennzeichnet, dass** die Seite des Trägerkörpers (1), an welcher das wenigstens eine dekorative Element (2) angeordnet ist, zusätzlich mit einer Folie (3), vorzugsweise aus PMMA, und/oder mit einer Deckplatte (6), vorzugsweise aus PMMA, versehen ist.

2. Verbundkörper nach Anspruch 1, **dadurch gekennzeichnet, dass** das dekorative Element (2) im Bereich (10) des faserverstärkten Kunststoffs mit dem, vorzugsweise zur Gänze aus faserverstärktem Kunststoff bestehenden, Trägerkörper (1) verbunden ist.

3. Verbundkörper nach Anspruch 1 oder 2, **dadurch gekennzeichnet, dass** der Kunststoff, vorzugsweise der faserverstärkte Kunststoff, ausgewählt ist aus der Gruppe der Duroplasten, vorzugsweise in Form eines Pulverlacks, oder aus der Gruppe der Thermoplasten.

4. Verbundkörper nach einem der Ansprüche 1 bis 3, **dadurch gekennzeichnet, dass** die Fasern ausgewählt sind aus Carbonfasern, Glasfasern, Aramidfasern, Basaltfasern und/oder Naturfasern.

5. Verbundkörper nach einem der Ansprüche 1 bis 4, **dadurch gekennzeichnet, dass** das wenigstens eine dekorative Element (2) ein Schmuckstein (2), der als, vorzugsweise mit Facetten versehener, natürlicher oder synthetischer Edelstein oder als, vorzugsweise mit Facetten versehener, Glasstein, vorzugsweise aus Kristallglas, ausgebildet ist und/oder ein metallisches Dekorationsobjekt, ein Holzelement, eine Dekorfolie oder ein technisches Funktionselement ist.

6. Verfahren zur Herstellung eines dekorativen Verbundkörpers (4) nach einem der Ansprüche 1 bis 5, **gekennzeichnet durch** die folgenden Schritte:
i. Erhitzen des plattenförmigen Trägerkörpers (1) auf eine erste Temperatur
ii. Verpressen des wenigstens einen dekorativen Elements (2) mit dem plattenförmigen Trägerkörper (1)
iii. Ausbilden einer stoffschlüssigen Verbindung zwischen dem dekorativen Element (2) und dem plattenförmigen Trägerkörper (1).

7. Verfahren nach Anspruch 6, wobei während des Verpressens der Trägerkörper (1) auf eine Temperatur oberhalb der ersten Temperatur erhitzt wird.

8. Verfahren nach Anspruch 6 oder 7, wobei die erste Temperatur 90°C - 250°C, vorzugsweise 120°C - 220°C und ganz vorzugsweise 130°C - 180°C, beträgt und das Verpressen bei einem Druck (p) von 0,01 - 1 kN/cm², vorzugsweise 0,02 - 0,5 kN/cm² und ganz vorzugsweise 0,03 - 0,2 kN/cm², erfolgt.

9. Verfahren nach einem der Ansprüche 6 bis 8, wobei vor dem Verpressen des wenigstens einen dekorativen Elements (2) mit dem Trägerkörper (1) eine Kavität (5) für das dekorative Element (2) vorgeformt wird.

10. Verfahren nach einem der Ansprüche 6 bis 9, wobei das wenigstens eine dekorative Element (2) von einer Folie (3) während des Verpressens gehalten wird.

11. Verfahren nach einem der Ansprüche 6 bis 10, wobei das Abkühlen des Verbundkörpers (4) unter Aufrechterhaltung eines Pressdrucks (p) erfolgt.

12. Verfahren nach einem der Ansprüche 6 bis 11, wobei das wenigstens eine dekorative Element (2) gleichzeitig mit einer Deckplatte (6), vorzugsweise aus PMMA, mit dem plattenförmigen Trägerkörper (1) verpresst wird.

13. Verfahren nach einem der Ansprüche 6 bis 12, wobei das wenigstens eine dekorative Element (2) gleichzeitig mit einer Folie (3), vorzugsweise aus PMMA, mit dem plattenförmigen Trägerkörper (1) verpresst wird.

14. Verfahren nach einem der Ansprüche 6 bis 13, **dadurch gekennzeichnet, dass** das wenigstens eine dekorative Element (2) in ein Kunststoffgranulat oder -pulver (11) eingelegt wird, wobei das in das Kunststoffgranulat oder -pulver (11) eingelegte dekorative Element (2) gemäß Schritt (ii) mit dem plattenförmigen Trägerkörper (1) verpresst wird.

## Claims

1. Decorative composite body (4) containing a planar supporting body (1) made of plastics material and at least one decorative element (2) fixed in the supporting body (1), the supporting body (1) consisting, at least in regions, of a fibre-reinforced plastics material, and the decorative element (2) being integrally bonded to melted or at least partly liquefied and re-hardened plastics material of the planar supporting body (1), **characterised in that** the face of the supporting body (1) on which the at least one decorative element (2) is arranged is additionally provided with a film (3), preferably made of PMMA, and/or with a cover plate (6), preferably made of PMMA.

2. Composite body according to claim 1, **characterised in that** the decorative element (2) is bonded to the supporting body (1) in the region (10) of the fibre-reinforced plastics material, the entirety of which supporting body preferably consists of fibre-reinforced plastics material.

3. Composite body according to either claim 1 or claim 2, **characterised in that** the plastics material, preferably the fibre-reinforced plastics material, is selected from the group of thermosetting plastics, preferably in the form of a coating powder, or from the group of thermoplastics.

4. Composite body according to any of claims 1 to 3, **characterised in that** the fibres are selected from carbon fibres, glass fibres, aramid fibres, basalt fibres and/or natural fibres.

5. Composite body according to any of claims 1 to 4, **characterised in that** the at least one decorative element (2) is a gemstone (2) which is in the form of a natural or synthetic precious stone preferably provided with facets, or a glass stone preferably made of crystal glass and preferably provided with facets, and/or is a metal decoration object, a wooden element, a decorative film or a technical functional element.

6. Method for producing a decorative composite body (4) according to any of claims 1 to 5, **characterised by** the following steps:
i. heating the planar supporting body (1) to a first temperature
ii. pressing the at least one decorative element (2) together with the planar supporting body (1)
iii.forming an integral bond between the decorative element (2) and the planar supporting body (1).

7. Method according to claim 6, wherein, during the pressing process, the supporting body (1) is heated to a temperature above the first temperature.

8. Method according to either claim 6 or claim 7, wherein the first temperature is 90°C - 250°C, preferably 120°C - 220°C and most preferably 130°C - 180°C, and the pressing process takes place at a pressure (p) of 0.01 - 1 kN/cm², preferably 0.02 - 0.5 kN/cm² and most preferably 0.03 - 0.2 kN/cm².

9. Method according to any of claims 6 to 8, wherein, before the at least one decorative element (2) is pressed together with the supporting body (1), a cavity (5) for the decorative element (2) is preformed.

10. Method according to any of claims 6 to 9, wherein the at least one decorative element (2) is held by a film (3) during the pressing process.

11. Method according to any of claims 6 to 10, wherein the composite body (4) is cooled down while a pressing power (p) is maintained.

12. Method according to according to any of claims 6 to 11, wherein the at least one decorative element (2) is pressed together with the planar supporting body (1) at the same time as being pressed together with a cover plate (6), which is preferably made of PMMA.

13. Method according to any of claims 6 to 12, wherein the at least one decorative element (2) is pressed together with the planar supporting body (1) at the same time as being pressed together with a film (3), which is preferably made of PMMA.

14. Method according to any of claims 6 to 13, **characterised in that** the at least one decorative element (2) is placed into plastics pellets or plastics powder (11), the decorative element (2) placed in the plastics pellets or plastics powder (11) being pressed together with the planar support body (1) according to step (ii).

## Revendications

1. Corps composite décoratif (4) comprenant un corps de support (1) en forme de plaque en matière plastique et au moins un élément décoratif (2) fixé dans le corps de support (1), le corps de support (1) étant constitué au moins partiellement d'une matière plastique renforcée par des fibres, et l'élément décoratif (2) étant relié par combinaison de matière à une matière plastique, fondue ou au moins partiellement liquéfiée et à nouveau solidifiée, du corps de support (1) en forme de plaque, **caractérisé en ce que** le côté du corps de support (1), où l'au moins un élément décoratif (2) est disposé, est en outre pourvu d'une feuille (3), de préférence en PMMA, et/ou d'une plaque de recouvrement (6), de préférence en PMMA.

2. Corps composite selon la revendication 1, **caractérisé en ce que** l'élément décoratif (2) est relié dans la zone (10) de la matière plastique renforcée par des fibres au corps de support (1), constitué, de préférence en intégralité, d'une matière plastique renforcée par des fibres.

3. Corps composite selon la revendication 1 ou 2, **caractérisé en ce que** la matière plastique, de préférence la matière plastique renforcée par des fibres, est sélectionnée dans le groupe des thermodurcissables, de préférence sous la forme d'une peinture en poudre, ou dans le groupe des thermoplastiques.

4. Corps composite selon l'une des revendications 1 à 3, **caractérisé en ce que** les fibres sont sélectionnées parmi des fibres de carbone, fibres de verre, fibres d'aramide, fibres de basalte et/ou fibres naturelles.

5. Corps composite selon l'une des revendications 1 à 4, **caractérisé en ce que** l'au moins un élément décoratif (2) est un joyau (2) se présente sous la forme d'une pierre précieuse naturelle ou synthétique, de préférence pourvue de facettes ou sous la forme d'une pierre en verre, de préférence pourvue de facettes, de préférence en cristal et/ou est un objet de décoration métallique, un élément en bois, une feuille décorative ou un élément fonctionnel technique.

6. Procédé de fabrication d'un corps composite décoratif (4) selon l'une des revendications 1 à 5, **caractérisé par** les étapes suivantes consistant à :
i. chauffer le corps de support (1) en forme de plaque jusqu'à une première température
ii. presser l'au moins un élément décoratif (2) contre le corps de support (1) en forme de plaque
iii.former une liaison par combinaison de matière entre l'élément décoratif (2) et le corps de support (1) en forme de plaque.

7. Procédé selon la revendication 6, dans lequel pendant le pressage du corps de support (1), l'on chauffe à une température supérieure à la première température.

8. Procédé selon la revendication 6 ou 7, dans lequel la première température est comprise entre 90°C et 250°C, de préférence 120°C et 220°C et de manière préférée entre toutes 130°C et 180°C, et le pressage est réalisé à une pression (p) de 0,01 à 1 kN/cm², de préférence 0,02 à 0,5 kN/cm² et de manière préférée entre toutes 0,03 à 0,2 kN/cm².

9. Procédé selon l'une des revendications 6 à 8, dans lequel une cavité (5) est préformée pour l'élément décoratif (2) avant le pressage de l'au moins un élément décoratif (2) contre le corps de support (1).

10. Procédé selon l'une des revendications 6 à 9, dans lequel l'au moins un élément décoratif (2) est maintenu par une feuille (3) pendant le pressage.

11. Procédé selon l'une des revendications 6 à 10, dans lequel le refroidissement du corps composite (4) s'effectue tandis qu'une pression de pressage (p) est maintenue.

12. Procédé selon l'une des revendications 6 à 11, dans lequel l'au moins un élément décoratif (2) est pressé simultanément avec une plaque de recouvrement (6), de préférence en PMMA, contre le corps de base (1) en forme de plaque.

13. Procédé selon l'une des revendications 6 à 12, dans lequel l'au moins un élément décoratif (2) est pressé simultanément avec une feuille (3), de préférence en PMMA, contre le corps de base (1) en forme de plaque.

14. Procédé selon l'une des revendications 6 à 13, **caractérisé en ce que** l'au moins un élément décoratif (2) est inséré dans un granulat ou une poudre en matière plastique (11), l'élément décoratif (2) inséré dans le granulat ou la poudre en matière plastique (11) étant pressé contre le corps de base (1) en forme de plaque selon l'étape (ii).
